# EUROPEAN PATENT APPLICATION

(11) **EP 4 573 870 A1**
(43) Date of publication of application: **25.06.2025**
(21) Application number: 23219958.8
(22) Date of filing: 22.12.2023
(51) Int. Cl.: A01C 21/00, G06Q 50/02, A01B 79/00

(54) **METHOD AND SYSTEM FOR DETERMINING A SOIL NITROGEN AVAILABILITY AND A FERTILIZER DEMAND FOR A CROP**

(71) Applicant: Yara International ASA, 0277 Oslo (NO)
(72) Inventor: OLSSON, Carl-Magnus, 211 75 MALMÖ (SE); GRUVAEUS, Ingemar, 211 75 MALMÖ (SE)
(74) Representative: AWA Sweden AB

(57) **Abstract**

Method and system for determining a soil nitrogen availability and a fertilizer demand for a crop, comprising determining a measurement region (300) within the agricultural field prior to a fertilizer application, wherein the measurement region (300) receives no fertilizer, wherein later the nitrogen uptake of the crop is measured, providing a soil nitrogen availability. Further embodiments for the recommendation and application of fertilizer is envisaged.

## Description

### Technical field

The present disclosure relates to a method and system for determining a soil nitrogen availability and a fertilizer demand for a crop.

### Background

Determining the right amount of fertilizer is a difficult decision for a farmer. A deficit in the provision of nutrients for the crop will reduce yield, while the abuse of fertilizer produces economic losses and damages the environment, since unused nutrients will run off and pollute nearby water sources. Due to the more stringent regulations regarding the use of fertilizer in Europe, it is crucial to determine the amount of soil nitrogen an agricultural field may accumulate over the season due to previous applications of fertilizers and adapt the fertilization recommendations generated based on the fertilizer demand of the crop for top-up applications which can boost productivity of the fields, while reducing the amount of fertilizer used.

Usual approaches for measuring the soil nitrogen availability comprise soil chemical analysis which involve sending samples to a lab, often not in the immediate vicinities of the farmer or making use of expensive and unreliable nitrogen soil sensors. Sending samples in the height of the season requires unnecessary delays which can compromise the timely application of fertilizer at the end when the top-up applications are expected to boost the crop growth during the last periods of crop development. On the other side, due to the natural granularity of soil, analysis of soil nitrogen by means of soil sensors leads to very inconsistent results since the sensors are usually configured to measure in a limited volume of soil at a specific depth, hereby neglecting the variability which can be present due to soil composition and microbial activity at different layers within the soil and in specific volumes.

Hence, an approach which solves the existing problems and unlocks a reliable determination of the soil nitrogen availability without the disadvantages of the existing methods is needed and has been envisaged by the inventors of the current application.

### Summary

According to a first aspect of the present disclosure, this and other objectives are achieved by a computer implemented method for determining a soil nitrogen availability, comprising determining an agricultural field comprising the crop for which a fertilizer recommendation is intended and receiving data of the crop; determining a fertilization requirement for the crop based at least on the received data of the crop; determining a measurement region within the agricultural field, wherein the measurement region is an area where no nutrients are to be added; generating measures to avoid the measurement region from being fertilized; determining a fertilization amount for at least one fertilizer application according to the determined fertilization requirement of the agricultural field, wherein the measurement region is not fertilized due to the generated measures; receiving a nitrogen uptake of the crop in the measurement region; and determining a soil nitrogen availability.

According to a second aspect of the present disclosure, the method further comprises receiving at least one of farm data, field data, crop type, crop variety, measurement region location, growth stage and target yield.

According to a third aspect of the present disclosure, receiving a measurement region location further comprises receiving at least one of position dependent yield data, biomass data or soil status from previous crop seasons; determining at least one position on the field representing an average or median from at least one of the received position dependent yield data, position dependent biomass data or position dependent soil status and determining the measurement region location based on the at least one determined position.

According to a fourth aspect of the present disclosure, receiving the nitrogen uptake of the crop in the measurement region comprises receiving a leaf cover index of the crop in the measurement region and receiving a chlorophyl content or concentration of the crop in the measurement region.

According to a further aspect of the present disclosure, the method further comprising determining a growth stage of the crop and determining a time window for determining the nitrogen uptake of the crop in the measurement region.

According to a further aspect of the present disclosure, the method further comprises determining a second measurement region and determining the nitrogen uptake of the crop in the second measurement region.

According to a further aspect of the present disclosure, the method further comprises determining a fertilizer recommendation for the crop based on the determined soil nitrogen availability, wherein the fertilizer recommendation is based on the fertilization requirement and the soil nitrogen availability.

According to a further aspect of the present disclosure, the method further comprises determining the nitrogen uptake of the crop outside of the measurement region and adapting the fertilizer recommendation based on the nitrogen uptake of the crop outside of the measurement region.

According to a further aspect of the present disclosure, the method further comprising receiving remote data, wherein the remote data comprises image data of the agricultural field and the fertilizer recommendation is adjusted based on the remote data.

According to a further aspect of the present disclosure, the method further comprises producing a machine-readable script file based on the determined fertilizer recommendation for an agricultural apparatus to carry out a corresponding fertilizer application.

According to a further aspect of the present disclosure, the method further comprises implementing the fertilizer recommendation by means of an agricultural apparatus configured to carry out a fertilizer application.

According to further aspects, a system, a data processing apparatus, a computer-readable storage medium, and a computer program product configured to carry out the above discussed methods are envisaged within the present disclosure.

### Brief description of the figures

The accompanying drawings, which are included to provide a further understanding of the present disclosure and are incorporated in and constitute a part of this specification, illustrate embodiments of the disclosure and together with the description serve to explain the principles of the disclosure.
Figure 1 shows a schematic representation of a system according to an embodiment of the present disclosure.

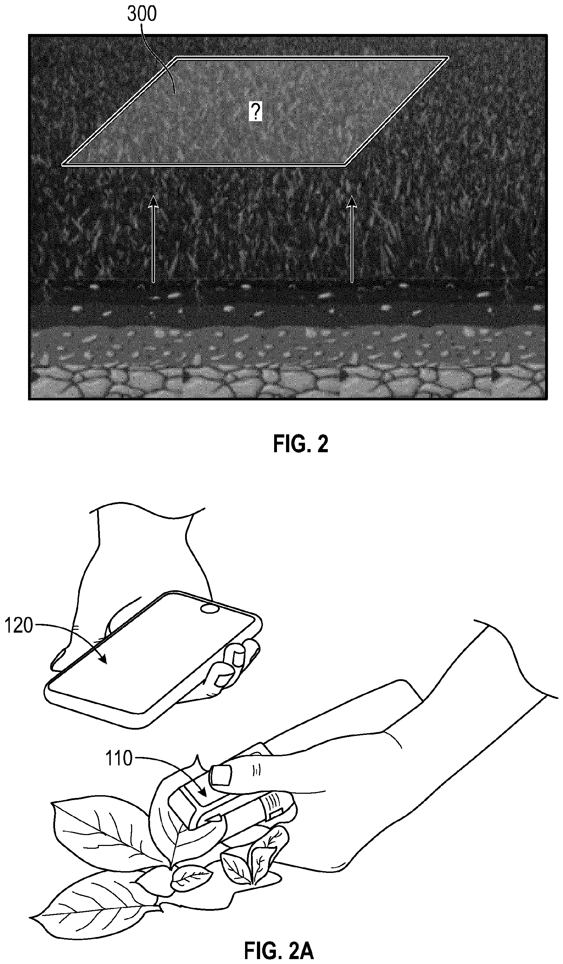

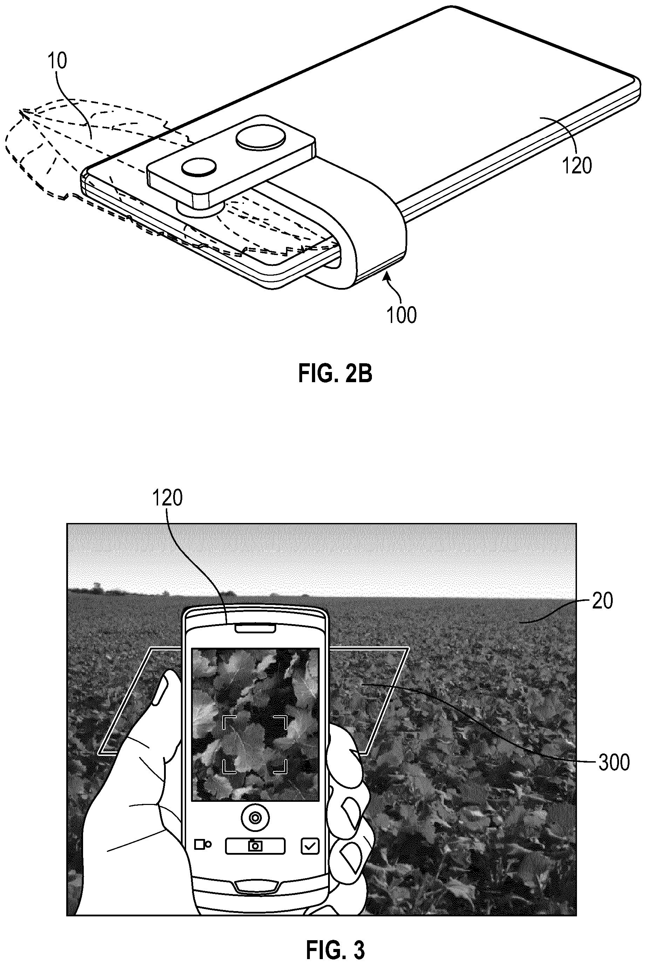

Figure 2 shows a schematic of measurement region within an agricultural field.
Figures 2a and 2b show an exemplary use of devices according to different embodiments of the system of the present disclosure.
Figure 3 shows an exemplary use of a device according to an embodiment of the system of the present disclosure.
Figure 4 shows a representation of a graphical user interface according to an embodiment of the present disclosure.
Figure 5 shows a workflow according to the main embodiment of the current disclosure.
Figure 6 shows a workflow according to a further embodiment of the current disclosure.

The accompanying drawings are used to help understand the technical idea of the present disclosure and it should be understood that the idea of the present disclosure is not limited by the accompanying drawings. The idea of the present disclosure should be construed to extend to any alterations, equivalents and substitutes besides the accompanying drawings and as supported by the claims and the description.

### Detailed Description

The terms "comprising", "comprises" and "comprised of" as used herein are synonymous with "including", "includes" or "containing", "contains", and are inclusive or open-ended and do not exclude additional, non-recited members, elements or method steps. It will be appreciated that the terms "comprising", "comprises" and "comprised of" as used herein comprise the terms "consisting of", "consists" and "consists of".

Unless otherwise defined, all terms used in disclosing the application, including technical and scientific terms, have the meaning as commonly understood by one of ordinary skill in the art to which this application belongs. By means of further guidance, term definitions are included to better appreciate the teaching of the present application.

In the following passages, different aspects of the application are defined in more detail. Each aspect so defined may be combined with any other aspect or aspects unless clearly indicated to the contrary. In particular, any feature indicated as being preferred or advantageous may be combined with any other feature or features indicated as being preferred or advantageous.

Reference throughout this specification to "one embodiment" or "an embodiment" means that a particular feature, structure or characteristic described in connection with the embodiment is included in at least one embodiment of the present application. Thus, appearances of the phrases "in one embodiment" or "in an embodiment" in various places throughout this specification are not necessarily all referring to the same embodiment, but may. Furthermore, the particular features, structures or characteristics may be combined in any suitable manner, as would be apparent to a person skilled in the art from this disclosure, in one or more embodiments. Furthermore, while some embodiments described herein include some but not other features included in other embodiments, combinations of features of different embodiments are meant to be within the scope of the application, and form different embodiments, as would be understood by those in the art. For example, in the appended claims, any of the claimed embodiments can be used in any combination.

In the present description of the application, reference is made to the accompanying drawings that form a part hereof, and in which are shown by way of illustration only of specific embodiments in which the application may be practiced. Parenthesized or emboldened reference numerals affixed to respective elements merely exemplify the elements by way of example, with which it is not intended to limit the respective elements. It is to be understood that other embodiments may be utilised and structural or logical changes may be made without departing from the scope of the present application. The following detailed description, therefore, is not to be taken in a limiting sense, and the scope of the present application is defined by the appended claims.

When fertilizing a field, farmers encounter many challenges due to the increasing prices of fertilizers and environmental regulations, such that farmers are forced to increase the nutrient use efficiency, and specifically the nitrogen use efficiency, of their crops in order to reduce the amount of fertilizer used while achieving improving yields which allow them to stay competitive. When fertilizing a field, the farmer usually determines a fertilizer requirement for the crop present in one agricultural field depending on different factors. The fertilizer requirement is usually based on the crop type and expected yield, but may depend as well on external factors like fertilizer prices and national regulations.

The farmers then usually split the amount of fertilizer intended for the season over different applications, carrying out at least a first dressing upon sowing, a second dressing when the plants have started growing and a top dressing before the senescence of the crop to improve yield, and optionally other dressings or foliar applications. Such a timing of fertilizer dressing improves the nutrient availability for the plants when they need it and avoid other disadvantages like nitrogen leaching. Nutrient leaching is highly dependent on weather and soil types and may vary greatly. Optionally, other agricultural products can be applied during the season which improve the crop health and yield, spraying or spreading chemical or natural fungicides pesticides, additives and/or biostimulants.

Moreover, due to weather constraints it there is a limitation as to the periods in which the crops can be fertilized (e.g. solid fertilizers need rain to become efficient), which leave the farmers little room for planning and scheduling the fertilizer application. Hence, it is important to be able to determine the fertilizer demand well in advance for the farmers to conveniently plan the further steps (e.g. fertilizer supply, machinery rental or servicing, ...).

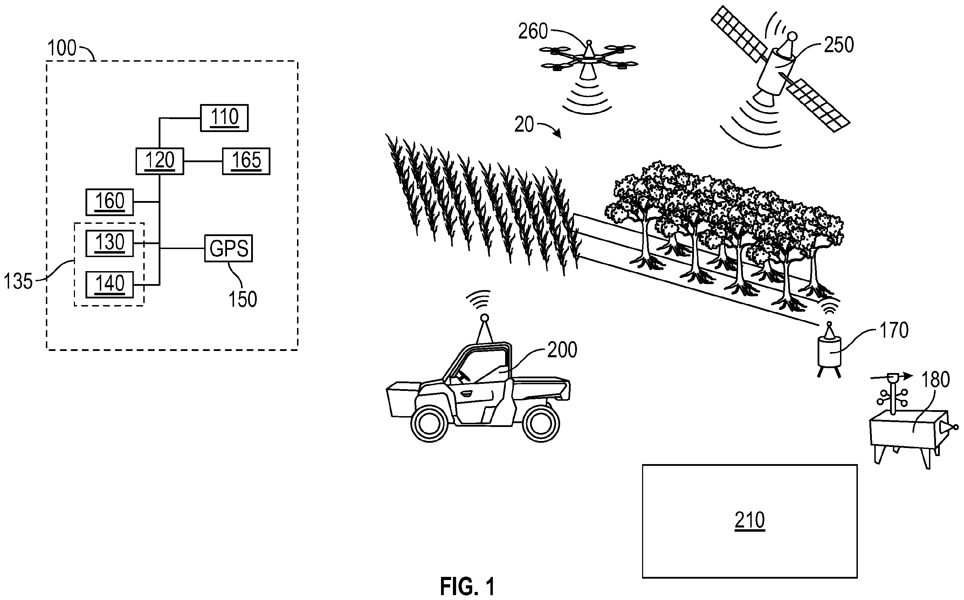

In Fig. 1, a schematic representation of an example of a system according to an embodiment of the present disclosure is represented. Figure 1 depicts an agricultural field comprising a crop with other systems and apparatus with which the system 100 may interoperate. A system 100 according to the present disclosure may comprise a crop status detection device 110 suitable for the detection of the nitrogen uptake of a crop. According to some embodiments, system 100 may comprise an own communication unit 120.

Crop status detection devices according to the present disclosure present different constructional arrangements. Some embodiments of these devices comprise an own communication unit or are operably connected to a mobile communication device like a smartphone or tablet. In other embodiments, the devices are peripherals attached to the mobile communication device or use the camera of the mobile communication device as optical detection unit for detecting different properties from which the crop status may be derived. However, no specific determination of the detection principle nor about the specificities of the device, since these are not intrinsically related to the advantages provided by the current disclosure. System 100 may therefore be an integral or dedicated unit integrated with the crop status detection device 110, or represent a separate electronic communication device operably connected with it. Different examples of these embodiments would be represented by already existing products like the N-Tester BT°, the N-Tester Clip° and YaraIrix^{®}, which are incorporated herein by reference. While the crop status detection device may be a single device (e.g. a smartphone configured to determine crop nitrogen concentration and leaf area index by means of different applications), there might be a plurality of devices represented as the system of the current disclosure and such embodiments are not excluded from the teachings of the present disclosure.

System 100 comprises several components such as a processor 160, , a memory unit 165, a display 130 and an input unit 140, which might be combined as a touch sensitive screen 135, and optionally, a location determining or GPS unit 150 or equivalent. System 100 is however not limited by these components and may further comprise other element as customary within the standard practice. According to the main embodiment of the present disclosure, the system of may be embodied by a processing device as defined by a general-purpose computer, may it be a desktop or a mobile electronic device. Within the present disclosure, "receiving" shall be understood as acquiring the respective data by means of any of the dedicated components of the system. For example, receiving a nitrogen uptake, for example, may be understood as being input by the farmers via the input unit 140 or received from independent crop status detection devices 110 via the communication unit 120.

System 100 may further comprise an agricultural recommendation engine 210 to which the system may be remotely connected by means of the communication unit. Agricultural recommendation engine 210 may be represented by a computer, a remotely accessible server, other client-server architectures or any other electronic devices usually encompassed under the term data processing apparatus.

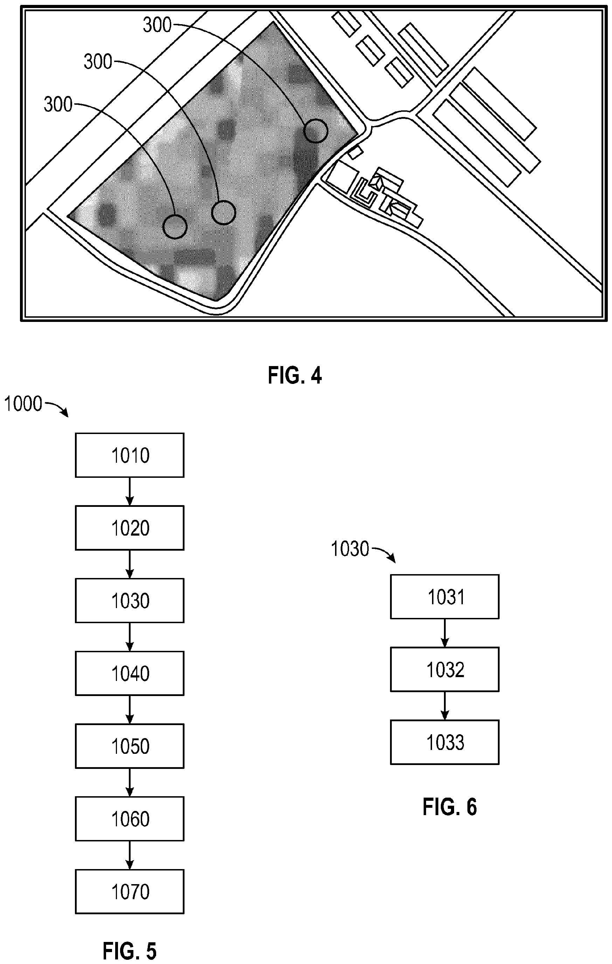

The discussion of the main method 1000 of the current disclosure will be made with reference to Figure 5.

The method of the current disclosure comprises determining 1010 an agricultural field comprising the crop for which a fertilizer recommendation is intended and receiving data of the crop. With the implementation of farm management systems, farmers are able of managing different fields and through these systems have the data pertaining to the specific crops available at hand in order to calibrate the fertilizer needs of the crop.

The method further comprises determining 1020 a fertilization requirement for the crop based at least on the received data of the crop. Along the usual data for determining a fertilization requirement, farmers and/or advisors make use of field, farm data, remote data and/or external data, whereby external data comprises weather data and further data provided by weather forecast providers or third parties. Field data may comprise amongst others, field and geographic identifiers regarding the geometry of the boundaries of the agricultural field, including the presence of areas within the agricultural field which are not managed and/or fertilized, topographic data, crop identifiers (crop variety and type, growth status, planting data and date, plant nutrition and health status), harvest data (yield, value, product quality, estimated or recorded historic values), soil data (type, pH, soil organic matter (SOM) and/or cation exchange capacity, CEC) as well as historic series of the data. Farm data may comprise further data regarding to planned and past tasks like field maintenance practices and agricultural practices, fertilizer application data, pesticide application data, irrigation data and other field reports as well as historic series of the data, allowing the comparison of the data with past data, and further administrative data like work shifts, logs and other organizational data. Planned and past tasks may comprise activities like surveillance of plants and pests, application of pesticides, fungicides or crop nutrition products, measurements of at least one farm or field parameter, maintenance and repair of ground hardware and other similar activities. Remote data may comprise imagery data (e.g. satellite, aerial, or by means of land vehicles) of the agricultural field representing a crop development or nutrient status. For example, based on a specific crop type and expected yield based on past results, together with weather forecasts and with the support of remote data at different development stages of previous and/or past seasons, a requirement for the crop can be ascertained.

As mentioned above with reference to Figure 1, system 100 may be further configured to receive any of the above-mentioned data and further field data from a predetermined number of locations within or nearby the analysed region, inputted manually by the users/farmers by means of the input unit 140 or received by the communication unit 120 from dedicated sensors 170. Further, system 100 and agricultural recommendation engine 210 may be configured to receive weather data from nearby weather stations 180 and/or external crop/farm sensors 170, as well as by means of the input unit 140. Nearby weather stations 180 and/or external crop/farm sensors 170 are configured to communicate via one or more networks. In another embodiment, weather data is provided by external weather forecast companies. Weather data may further include present and past temperatures, accumulated precipitation, relative humidity, wind speed, solar radiance, accumulated sun hours, etc.

System 100 may further be operatively connected to an agricultural apparatus 200. Examples of agricultural apparatus 200 include tractors, combines, fertilizer equipment and any other item of physical machinery or hardware which may be used in task associated with agriculture, especially the application of fertilizer. In one embodiment, system 200 may be configured to communicate with the agricultural apparatus 200 by means of wireless networks in order to carry out a fertilizer application. System 100 may be further configured to produce a downloadable script file for the agricultural apparatus 200 to carry out the fertilizer application.

With further reference to Figure 5, the method further comprises determining 1030 a measurement region within the agricultural field, wherein the measurement region is an area where no nutrients are to be added. Such a region may comprise an area of 2x2, 3x3, 3x4 m area within the field at a specific location which can be physically or electronically marked for the farmers to remember, such that measures can be generated to avoid the region from being fertilized, the scope of the current disclosure is however not limited to said measures. According to one embodiment, system 100 may electronically generate a specific location for the measurement region based on field data, as it will be explained below. According to another embodiment, the determination of the measurement region may be based on the location data of system 100, as generated by the GPS unit 150, wherein the farmers may be in a specific location of the field or walk around the intended measurement region.

In some cases, generating 1040 measures to avoid the measurement region from being fertilized may comprise generating instructions for the agricultural apparatus intended to carry out the fertilizer application, more generally referred to a fertilization apparatus, to spare that region from being fertilized. However, instructions for the farmers may be displayed on the display 135 so that the farmers can take specific actions for avoiding the fertilization of the area, for example, by placing a tarpaulin before the fertilizer application.

The method further comprises determining 1050 a fertilization amount for at least one fertilizer application according to the determined fertilization requirement of the agricultural field, wherein the measurement region is not fertilized due to the generated measures. Such an application may comprise one or various applications of fertilizer as mentioned above, which may include fertilizer applications at different growth stages of the crop. At any stage after development of the crop, the current method enables the determination of the soil nitrogen availability to tune further fertilizer applications, hereby enabling the reduction of further fertilizer recommendations which still fulfil the crop requirements and allow the increase of nutrient use efficiency.

The method further comprises receiving 1060 a nitrogen uptake of the crop in the measurement region, so that a determination of the soil nitrogen availability can be carried out. Since the measurement region has not had any fertilizer application, the nitrogen uptake of the crop has been limited to the nitrogen provided by the soil, and therefore a soil nitrogen availability can be determined.

Within the current disclosure, the soil nitrogen availability is to be understood as the plant available soil Nitrogen (mineralized or residual) taken up by the plants up until the moment of the determination of the crop nitrogen uptake.

The method further comprises determining 1070 the soil nitrogen availability. Such a determination is very helpful to establish the amount of nitrogen available to the crop as present in the soil, which can be delivered to the crop before the end of the crop season. Hence, the farmers can determine if a further application of fertilizer is needed and if so, a more accurate fertilizer recommendation can be determined which boosts yield and productivity, while increasing the nitrogen use efficiency which allows them to reduce costs and fulfil the environmental regulations.

According to a further embodiment, the method of the current disclosure may further comprise receiving at least one of farm data, field data, crop type, crop variety, measurement region location, growth stage and target yield.

According to the current disclosure, receiving any of the above-mentioned data may comprise the users/farmers manually inputting the data by means of the input unit 140 or accessing it from the memory unit 165 or via the agricultural recommendation engine 210.

According to a further embodiment of the current disclosure, receiving a measurement region location comprises receiving 1031 position dependent yield data from previous crop seasons. Position dependent yield data may be available to the farmers by means of harvesting equipment which measure the amount of harvested crop at specific locations. However, said yield data or productivity data can as well be determined by means of remote imagery available from satellite platforms, as it is known to the skilled person from, e.g., patent documents WO 2023/057498 A1 or US 11,663,753 B1.

According to a further embodiment, receiving a measurement region location comprises receiving, biomass data from previous crop seasons. Biomass data can be derived as well from remote imagery.

According to a further embodiment, receiving a measurement region location comprises receiving soil data. Soil data may be available to the farmer by means of soil chemical analysis or by means of remote imagery.

Based on the type of received data for determining the measurement region location, the method of the current disclosure may further comprise determining 1032 at least one position on the field representing an average or median from at least one of the received position dependent yield data, position dependent biomass data or position dependent soil data and determining 1033 the measurement region location based on the at least one determined position.

By determining a measurement region which can take into account the best suitable locations within the agricultural field, the variability of the field for different factors (soil properties, water distribution, ...) can be taken into account.

Following this embodiment, the system is configured to receive crop related data which may be of importance for the development of the crop. The system may be further configured to analyse the received data of the crop and/or the agricultural field and determine positions associated with the relevant data, wherein the system may be configured to determine positions representing an average or median of specific values, or any other measures of central tendency, which are supposed to be representative areas within the field.

As already explained, this data may be present at hand for the farmer by means of farm management systems, or due to the used of digitized harvesters which register position dependent data of the harvested amount of crop per area. In other another embodiment, system 100 or the agricultural recommendation engine may be configured to receive and/or process remote image data from drones or other unmanned imaging aerial vehicles 260 or satellite 250, wherein the system may be configured to process said image data from previous crop seasons and determine biomass, soil or yield data according to known approaches. While determining biomass or yield implies that the data has to be from previous crop seasons, data from the present crop season can be used for the soil data.

In a further embodiment, the system of the current disclosure may be configured to display on the display unit 130 a plurality of suitable measurement region 300 candidates by means of a dedicated graphical user interface, as it is to be seen in Figure 4, wherein the users may select at least one of the measurement region candidates by means of the input unit 140.

In a further embodiment, the method comprises receiving the crop nitrogen uptake in the measurement region comprises receiving a leaf cover index of the crop in the measurement region and receiving a chlorophyl content or concentration of the crop in the measurement region.

According to this embodiment, a quick and convenient determination is provided of the nitrogen uptake since not only the nitrogen concentration in the plants is taken into account, but as well the amount of biomass and therefore the nitrogen amount per area in the measurement region.

According to a further embodiment, the method of the current disclosure further comprises determining a growth stage of the crop and determining a time window for determining the crop nitrogen uptake in the measurement region.

Following this embodiment, the system of the current disclosure may access crop data from the agricultural recommendation engine or the memory unit 165, hereby determining the growth stage of the crop. Alternatively, the growth stage of the crop may be automatically determined after receiving a planting data, by means of modelling which takes crop season weather data into account, or a combination thereof. Following the determination of a time window where the farmers are supposed to carry out the determination of the measurements, farmers can plan accordingly their schedules.

According to a further embodiment, the method further comprises determining a second measurement region and determining the nitrogen uptake of the crop in the second measurement region. For example, when generating measures to avoid the measurement region from being fertilized, the agricultural apparatus intended to carry out the fertilizer application may receive instructions to determine a second measurement region in which the area can be overfertilized or fertilized according to the average amount of fertilizer applied to the field with each fertilizer application.

Alternatively, when the farmers apply measures to avoid the first measurement region from being fertilized, for example by means of a tarpaulin, the excess fertilizer being spread over the tarpaulin can be distributed over a second measurement region nearby the first measurement region straightaway, hereby achieving an N-rich strip or overfertilized strip which helps determining the fertilizer requirement of the rest of the crop. As such, in cases where an overfertilization of the second measurement region is instructed, while the first measurement region represents a nutrient depleted region which delivers the soil nitrogen as only source of nitrogen, the second measurement region represents an overfertilized area where no nutrient limiting stress is present.

According to a further embodiment, the method further comprises determining a fertilizer recommendation for the crop based on the determined soil nitrogen availability, wherein the fertilizer recommendation is based on the fertilization requirement and the soil nitrogen availability. Following this approach, the soil nitrogen availability, usually hidden to measurements directed to the crop, can be accounted for and an improved fertilization recommendation can be generated.

According to a further embodiment, the method further comprises receiving remote data, wherein the remote data comprises image data of the agricultural field and the fertilizer recommendation is adjusted based on the remote data. Following this embodiment, the system of the current disclosure makes use of suitable remote data for determining the in-field variability of other crop nutrient related status. While determining the crop status of a measurement region of the sizes as disclosed in the present application is not practicable, different information from the agricultural field can be gained by the use of remote data. Remote data can be referred to data provided by imaging satellites 250 or suitable manned or unmanned imaging aerial vehicles 260. These satellite or vehicle systems are configured to communicate by means of dedicated networks and usual methods which do not need being disclosed herein. The agricultural recommendation engine 210 may be configured to process said remote image data to derive agricultural indices, which are closely related to the biomass, crop nitrogen and/or soil properties of the agricultural field, hereby adapting the fertilization recommendation according to local variabilities of the crop across the agricultural field, generating a variable rate application of fertilizer, hereby improving the nitrogen use efficiency.

According to a further embodiment, the method further comprises determining the nitrogen uptake of the crop outside of the measurement region and adapting the fertilizer recommendation based on the nitrogen uptake of the crop outside of the measurement region. The crop status detection device may as well be used for detecting the crop nutrient uptake outside the measurement region, hereby calibrating the remote data if present and improving the fertilizer recommendation.

According to a further embodiment, the method further comprises producing a machine-readable script file based on the determined fertilizer recommendation for an agricultural apparatus to carry out a corresponding fertilizer application. Following this embodiment, the system of the current disclosure, or alternatively the agricultural recommendation engine 210 may be configured to produce a machine-readable script which can be uploaded, by means of wireless or other data transmission means to an agricultural apparatus configured to carry out the fertilizer application.

According to a further embodiment, the method further comprises implementing the fertilizer recommendation by means of an agricultural apparatus configured to carry out a fertilizer application.

While the present disclosure has been illustrated by a description of various embodiments and while these embodiments have been described in considerable detail, it is not the intention of the applicant to restrict or in any way limit the scope of the appended claims to such detail. Additional advantages and modifications will readily appear to those skilled in the art. The disclosure in its broader aspects is therefore not limited to the specific details, representative apparatus and method, and illustrative example shown and described.

Accordingly, the detailed description thereof should not be construed as restrictive in all aspects but considered as illustrative. The scope of the disclosure should be determined by reasonable interpretation of the appended claims and all changes that come within the equivalent scope are included in the scope of the current disclosure.

The process steps, method steps, algorithms or the like may be described in a sequential order, such processes, methods and algorithms may be configured to work in alternate orders. In other words, any sequence or order of steps that may be described does not necessarily indicate a requirement that the steps be performed in that order. The steps of processes described herein may be performed in any order practical. Further, some steps may be performed simultaneously, in parallel, or concurrently. Various methods described herein may be practiced by combining one or more machine-readable storage media containing the code according to the present disclosure with appropriate standard computer hardware to execute the code contained therein. An apparatus for practicing various embodiments of the present disclosure may involve one or more computers (or one or more processors within a single computer) and storage systems containing or having network access to computer program(s) coded in accordance with various methods described herein, and the method steps of the disclosure could be accomplished by modules, routines, subroutines, or subparts of a computer program product. While the foregoing describes various embodiments of the disclosure, other and further embodiments of the disclosure may be devised without departing from the basic scope thereof. The scope of the disclosure is determined by the claims that follow. The disclosure is not limited to the described embodiments, versions or examples, which are included to enable a person having ordinary skill in the art to make and use the disclosure when combined with information and knowledge available to the person having ordinary skill in the art.

## Claims

1. A computer implemented method for determining a soil nitrogen availability, comprising the steps of:
- determining an agricultural field comprising the crop for which a fertilizer recommendation is intended and receiving data of the crop;
- determining a fertilization requirement for the crop based at least on the received data of the crop;
- determining a measurement region within the agricultural field, wherein the measurement region is an area where no nutrients are to be added;
- generating measures to avoid the measurement region from being fertilized;
- determining a fertilization amount for at least one fertilizer application according to the determined fertilization requirement of the agricultural field, wherein the measurement region is not fertilized due to the generated measures;
- receiving a nitrogen uptake of the crop in the measurement region; and
- determining a soil nitrogen availability based on the nitrogen uptake of the crop in the measurement region.

2. The method according to claim 1, the method further comprising receiving at least one of farm data, field data, crop type, crop variety, measurement region location, growth stage and target yield.

3. The method according to claim 2, wherein receiving a measurement region location further comprises:
- receiving at least one of position dependent yield data, biomass data or soil status from previous crop seasons;
- determining at least one position on the field representing an average or median from at least one of the received position dependent yield data, position dependent biomass data or position dependent soil status
- determining the measurement region location based on the at least one determined position.

4. The method according to any of the preceding claims, wherein receiving the nitrogen uptake of the crop in the measurement region comprises:
- receiving a leaf cover index of the crop in the measurement region, and
- receiving a chlorophyl content or concentration of the crop in the measurement region;

5. The method according to any of the preceding claims, the method further comprising determining a growth stage of the crop and determining a time window for determining the nitrogen uptake of the crop in the measurement region.

6. The method according to any one of the preceding claims, wherein the method further comprises determining a second measurement region and determining the nitrogen uptake of the crop in the second measurement region.

7. The method according to any one of the preceding claims, wherein the method further comprises determining a fertilizer recommendation for the crop based on the determined soil nitrogen availability, wherein the fertilizer recommendation is based on the fertilization requirement and the soil nitrogen availability.

8. The method according to claim 7, wherein the method further comprises determining the nitrogen uptake of the crop outside of the measurement region and adapting the fertilizer recommendation based on the nitrogen uptake of the crop outside of the measurement region.

9. The method according to claim 7, the method further comprising receiving remote data, wherein the remote data comprises image data of the agricultural field and the fertilizer recommendation is adjusted based on the remote data.

10. The method according to any one of claims 6 to 9, wherein the method further comprises producing a machine-readable script file based on the determined fertilizer recommendation for an agricultural apparatus to carry out a corresponding fertilizer application.

11. The method according to any one of claims 6 to 10, wherein the method further comprises implementing the fertilizer recommendation by means of an agricultural apparatus configured to carry out a fertilizer application.

12. A data processing apparatus comprising means for carrying out the method of any one of the claims 1 to 11.

13. A computer-readable storage medium comprising instructions which, when executed by a computer system, cause the computer to carry out the method of any one of the claims 1 to 11.

14. A computer program product comprising instructions which, when the program is executed by a computer system, cause the computer to carry out the method of any one of the claims 1 to 11.
